# EUROPEAN PATENT SPECIFICATION

(11) **EP 3 998 754 B1**
(45) Date of publication and mention of the grant of the patent: **15.11.2023**
(21) Application number: 20875899.5
(22) Date of filing: 27.09.2020
(51) Int. Cl.: H04L 67/1001, H04L 67/1029

(54) **DATA DISTRIBUTION METHOD, STORAGE SERVER AND SUBSCRIPTION SERVER**
DATENVERTEILUNGSVERFAHREN, SPEICHERSERVER UND ABONNEMENTSERVER
PROCÉDÉ DE DISTRIBUTION DE DONNÉES, SERVEUR DE STOCKAGE UND SERVEUR D'ABONNEMENT

(30) Priority: 16.10.2019 CN 201910985286
(43) Date of publication of application: 18.05.2022
(73) Proprietor: Beijing Dajia Internet Information Technology Co., Ltd., Beijing 100085 (CN)
(72) Inventor: HU, Weisong, Beijing 100085 (CN)
(74) Representative: Yang, Shu
(86) International application number: PCT/CN2020/118122
(87) International publication number: WO 2021/073405

(56) References cited:
- CN-A- 106 790 402
- CN-A- 108 881 963
- CN-A- 110 839 061
- US-A1- 2014 059 127

## Description

### TECHNICAL FIELD

The present disclosure relates to the technical field of data distribution, and in particular, relates to a data distribution method and an apparatus.

### BACKGROUND

In the current production environments, the amount of data that needs to be distributed is increasing, and the real-time distribution of large-scale data is usually realized by using a distributed message queue system. The distributed message queue system is composed of a plurality of servers. The plurality of servers distribute and store messages in a plurality of message queues, and the plurality of servers perform distributed storage and real-time distribution of the messages in the plurality of message queues.

GOERTEK TECH CO LTD (CN108881963) provides a data obtaining method, a server and a client. The method performed by the server comprises: in response to receiving a target data obtaining request from a first client, determining a response client from the clients which have accessed the target data, wherein the response client is configured to respond to the target data obtaining request; and notifying the first client to acquire the target data from the response client. According to the technical solution provided by the invention, the defect that bandwidth is insufficient when a plurality of clients access the same server at the same time can be solved.

### SUMMARY

The invention is defined by the independent claims. The dependent claims define further detailed embodiments.

### BRIEF DESCRIPTION OF THE DRAWINGS

FIG. 1 is a diagram of a structure of a distributed message queue system according to an embodiment of the present disclosure;
FIG. 2 is a flowchart of a data distribution method according to an embodiment of the present disclosure;
FIG. 3 is a flowchart of another data distribution method according to an embodiment of the present disclosure;
FIG. 4 is a diagram of a structure of another distributed message queue system according to an embodiment of the present disclosure;
FIG. 5 is a diagram of a structure of another distributed message queue system according to an embodiment of the present disclosure;
FIG. 6 is a block diagram of a data distribution apparatus according to an embodiment of the present disclosure;
FIG. 7 is a block diagram of another data distribution apparatus according to an embodiment of the present disclosure;
FIG. 8 is a block diagram of an electronic device according to an embodiment of the present disclosure; and
FIG. 9 is a block diagram of another electronic device according to an embodiment of the present disclosure.

### DETAILED DESCRIPTION

The terms "first," "second," and the like in the description, claims, and accompanying drawings of the present disclosure are configured to distinguish similar objects instead of indicating a specific sequence or order. It should be understood that the data used in such a way is interchangeable under proper conditions to make it possible to implement the described embodiments of the present disclosure in sequences except those illustrated or described herein.

User information involved in the present disclosure is information authorized by a user or fully authorized by various parties.

In some embodiments, the meaning of A and/or B includes: A and B, A, and B.

In the related art, message data published by a server that publishes messages (hereinafter referred to as a production server) is uniformly stored in a distributed message queue system, and a plurality of servers that request to subscribe to messages (hereinafter referred to as subscription servers) need to subscribe to messages from message queues in the distributed message queue system. When a plurality of subscription servers subscribe to messages in the message queue simultaneously, the distributed message queue system needs to communicate with the plurality of subscription servers simultaneously, resulting in high network communication load and consuming many machine resources.

For clear illustration of embodiments of the present disclosure, an example of an application scenario of a data distribution method in the embodiments of the present disclosure is introduced.

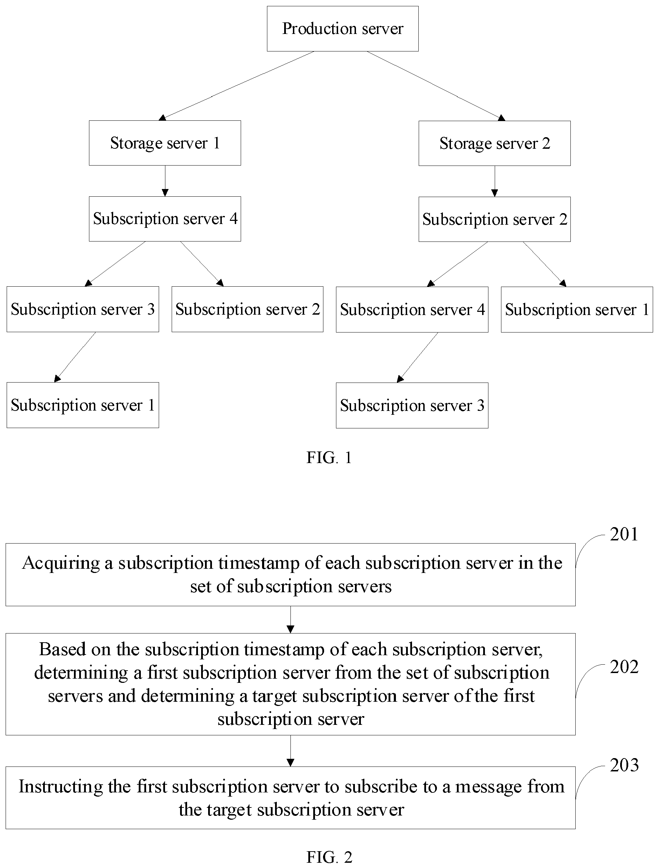

Referring to FIG. 1, FIG. 1 is a diagram of a structure of a distributed message queue system according to an embodiment of the present disclosure. As shown in FIG. 1, the distributed message queue system includes a storage server 1, a storage server 2, a subscription server 1, a subscription server 2, a subscription server 3, a subscription server 4, and a production server.

In the distributed message queue system, the production server publishes a produced message to a storage server based on the storage server configured in a local configuration file, and publishes a message queue identifier configured in the local configuration file to the storage server. The storage server stores the message published by the production server in a corresponding message queue based on the message queue identifier.

During the process of generating each message, the production server generates a time point corresponding to the message (i.e., the time point of the message), that is, each message generated by the production server includes the time point corresponding to the message. Upon generating each message, the production server sends the generated message to the storage server, and the storage server sequentially stores the message based on the sequence of the time point corresponding to each message. The message with the earliest time point (i.e., the smallest time point) is ranked at the top of the message queue.

In some embodiments, time unit of the time point includes: year, month, day, hour, minute, second, millisecond, and the like. The time unit of the time point is not limited in the embodiments of the present disclosure. In some embodiments, a number of storage servers, a number of subscription servers, and a number of production servers are determined based on business requirements, which are not limited in the embodiment of the present disclosure.

During the data distribution process, each of the subscription servers subscribes to a message in a corresponding message queue from the storage server based on the storage server and the message queue identifier configured in the local configuration file, and consumes the subscribed message (consuming the message means using the message). The message is data. For example, in a recommendation system, the production server acquires user data from a terminal, processes the acquired user data, generates a log (a type of message), and sends the log to the storage server for storage. The storage server is a server that stores logs. The subscription server subscribes to the logs from the storage server, and trains a model by using the subscribed logs to obtain a trained model.

Referring to FIG. 1, the storage servers configured in the local configuration file of the production server include the storage server 1 and the storage server 2. The message queue identifier corresponding to the storage server 1 and the storage server 2 is a message queue 1. The production server publishes a message to the storage server 1 and the storage server 2 respectively, and carry a message queue identifier when publishing the message. Upon receiving the message published by the production server, the storage server 1 and the storage server 2 store the message in the message queue 1 based on the message queue identifier corresponding to the message.

For example, the production server generates 1 to 30 messages, a time point corresponding to a first message is 001, a time point corresponding to a second message is 002, a time point corresponding to a third message is 003, and so on. The time points corresponding to the 1^{st} to 30^{th} messages are 001 to 030 respectively. The production server randomly sends the 30 messages whose time points are 001 to 030 to the storage server 1 or the storage server 2.

The 30 messages whose time points are 001 to 030 being sent to the storage server 1 is taken as an example. Upon receiving the 30 messages whose time points are 001 to 030, the storage server 1 stores the received messages sequentially in the message queue 1 of the storage server 1 based on the time point corresponding to each message in a time sequence from 001 to 030.

Similarly, upon generating 30 messages whose time points are from 031 to 060, the production server randomly sends the 30 messages whose time points are from 031 to 060 to the storage server 1 or the storage server 2. The 30 messages whose time points are from 031 to 060 being sent to the storage server 2 is taken as an example. The storage server 2 stores the 30 messages whose time points are from 031 to 060 in the message queue 1 of the storage server 2.

In the case that a message queue 2 exists, the processes that the storage server 1 and the storage server 2 store messages in the message queue 2 are the same as the processes for storing the messages in the message queue 1, which is not repeated herein.

For example, assuming that the message queues configured in the local configuration files of the subscription server 1, the subscription server 2, the subscription server 3, and the subscription server 4 are all the message queue 1, then the subscription server 1, the subscription server 2, the subscription server 3, and the subscription server 4 subscribe to a message in the message queue 1 from the storage server 1 respectively, wherein the message is at least one of the 30 messages whose time points are 001 to 030. Or the subscription server 1, the subscription server 2, the subscription server 3 and the subscription server 4 subscribe to a message in the message queue 1 from the storage server 2, wherein the message is at least one of the 30 messages whose time points are 031 to 060.

In some embodiments, the storage server maintains blocks, message queues, and subscription timestamps. A block is a fixed-size memory space used to store a plurality of messages in sequence. A message queue is a linked list composed of a plurality of blocks, and the plurality of blocks are arranged in order based on the creation time. A distributed message queue system supports a plurality of message queues simultaneously.

In some embodiments, the storage server further maintains a binary tree for the message queues. For example, a plurality of subscription servers subscribing to the same message queue are organized into a binary tree. The subscription server with a newer subscription timestamp has a node in the complete binary tree closer to the root node.

In some embodiments, with respect to a scenario where a plurality of subscription servers subscribe to the same message queue, during subscribing to a message in the message queue, one subscription server may first attempt to subscribe to the message from a subscription server corresponding to its parent node. In the case that the subscription fails, the subscription server may continue to attempt to subscribe to the message from a subscription server corresponding to its ancestor node. In the case that the subscription still fails, the subscription server may finally subscribe to the message from the storage server. In addition, the subscription server caches the subscribed message locally for its descendant nodes to subscribe to. The way of caching the subscribed message for other subscription servers to subscribe to effectively disperses the subscription pressure of a plurality of subscription servers to the distributed message queue system, thereby greatly reducing the network communication load of the distributed message queue system, and reducing the consumption of machine resources.

FIG. 2 is a flowchart of a data distribution method according to an embodiment of the present disclosure. Referring to FIG. 2, the data distribution method according to the embodiment of the present disclosure is performed by a distributed message queue system. The distributed message queue system includes a storage server and a set of subscription servers. This data distribution method is suitable for large-scale data distribution to reduce the communication load when network communication is conducted between the distributed message queue system and a plurality of subscription servers simultaneously, and reduce the consumption of machine resources of the distributed message queue system.

In some embodiments, the data distribution method according to the embodiments of the present disclosure is performed by a data distribution apparatus, wherein the data distribution apparatus is usually achieved in software and/or hardware. The data distribution apparatus is deployed in each storage server in the distributed message queue system. The method includes the following processes 201-203.

In 201, a subscription timestamp of each subscription server in the set of subscription servers is acquired.

The subscription timestamp is configured to indicate a subscription progress of the subscription server and marks a message that the subscription server has subscribed to and a message that needs to be subscribed to next time. In some embodiments, the subscription timestamp is a maximum time point among the time points of the messages subscribed by the subscription server each time. The set of subscription servers refers to a set composed of a plurality of subscription servers.

For example, with reference to FIG. 1, in a scenario where the subscription server 1 subscribes to 5 messages whose time points are 001 to 005 (the subscription server 1 either subscribes from the storage server 1, or from a subscription server which has subscribed to and stored these 5 messages), the maximum time point of the messages subscribed by subscription server 1 this time is 005, and it is determined that the subscription timestamp of the subscription server 1 is 005. The subscription timestamp 005 indicates that the subscription server 1 has subscribed to or is subscribing to the messages at the time point 005 and before the time point 005 (messages corresponding to the time points 001 to 004) in the message queue 1, and next time the subscription server 1 needs to subscribe to, from the time point 006, the messages at the time point 006 and after the time point 006.

In the embodiments of the present disclosure, the storage server acquires the subscription timestamp of each of the subscription servers to determine the subscription progress of each of the subscription servers. For example, with reference to FIG. 1, in a scenario where the subscription server 2 subscribes to 5 messages whose time points are 006 to 010, the subscription server 3 subscribes to 5 messages whose time points are 011 to 015, and the subscription server 4 subscribes to 5 messages whose time points are 016 to 020, then the storage server 1 acquires the subscription timestamp 005 of the subscription server 1, the subscription timestamp 010 of the subscription server 2, the subscription timestamp 015 of the subscription server 3, and the subscription timestamp 020 of the subscription server 4, respectively, to determine the subscription progress of each of the subscription servers.

In some embodiments, the subscription server subscribes to messages from the storage server 1 and the storage server 2. In some other embodiments, the subscription server subscribes to messages from other subscription servers. The storage server may acquire the subscription timestamp of each of the subscription servers by any suitable method, which is not limited in the embodiments of the present disclosure.

In 202, based on the subscription timestamps of the subscription servers, a first subscription server is determined from the set of subscription servers and a target subscription server of the first subscription server is determined.

The first subscription server subscribes to messages from other subscription servers. The target subscription server has subscribed to and stored the messages that the first subscription server needs to subscribe to.

In the embodiments of the present disclosure, upon acquiring the subscription timestamp of each of the subscription servers, the storage server determines the subscription progress of each of the subscription servers based on the subscription timestamp of the subscription server, and based on the subscription progress of each of the subscription servers, determines the first subscription server from the set of subscription servers and determines the target subscription server of the first subscription server.

In some embodiments, the storage server determines a sorting result of the subscription servers based on the subscription timestamps of the subscription servers; and determines a first subscription server and a target subscription server in the set of subscription servers based on the sorting result.

For example, in conjunction with 201, the subscription server 1 has subscribed to the messages whose time points are 001 to 005, the subscription server 1 needs to subscribe to 5 messages whose time points are 006 to 010 next time, and the subscription server 2, the subscription server 3 and the subscription server 4 have subscribed to and stored the 5 messages whose time points are 006 to 010, then the subscription server 1 subscribes to the messages whose time points are 006 to 010 from the subscription server 2, the subscription server 3, and the subscription server 4. In this case, the storage server 1 determines that the subscription server 1 is the first subscription server, and at the same time determines that the target subscription server of the subscription server 1 is at least one of the subscription server 2, the subscription server 3, or the subscription server 4.

Similarly, next time in the case that the subscription server 2 subscribes to 5 messages whose time points are 011 to 015 from the subscription server 3 and the subscription server 4, the storage server 1 determines that the subscription server 2 is the first subscription server and determines that the target subscription server of the subscription server 2 is the subscription server 3 and/or the subscription server 4.

Similarly, next time in the case that the subscription server 3 subscribes to 5 messages whose time points are 016 to 020 from the subscription server 4, the storage server 1 determines that the subscription server 3 is the first subscription server, and determines that the target subscription server of the subscription server 3 is the subscription server 4.

Because the subscription server 4 needs to subscribe to the 5 messages whose time points are from 021 to 025 next time, and the subscription server 1, the subscription server 2, and the subscription server 3 have not subscribed and stored the 5 messages whose time points are from 021 to 025, the subscription server 4 is not the first subscription server.

In some embodiments, one or more target subscription servers are determined for each first subscription server. For example, only one target subscription server is determined for each first subscription server. The number of target subscription servers determined for the first subscription server is determined based on business requirements, which is not limited in the embodiments of the present disclosure.

In 203, the first subscription server is instructed to subscribe to a message from the target subscription server.

In the embodiments of the present disclosure, upon determining the first subscription server and the target subscription server of the first subscription server, the storage server instructs the first subscription server to subscribe to a message from the corresponding target subscription server.

In some embodiments, the storage server sends a notification message to the first subscription server, wherein the notification message is configured to instruct the first subscription server to subscribe to the target message from the target subscription server. The target message is a message that the first subscription server needs to subscribe to, and the target subscription server has subscribed to and stored the target message.

For example, in conjunction with 202, in a scenario where the subscription server 1 is the first subscription server, the storage server 1 instructs the subscription server 1 to subscribe to 5 messages whose time points are 006 to 010 from the target subscription server (any one of the subscription server 2, the subscription server 3, or the subscription server 4).

In some embodiments, the storage server may instruct the first subscription server to subscribe to a message from the target subscription server by any suitable method, which is not limited in the embodiments of the present disclosure.

It should be noted that in the embodiments of the present disclosure, the subscription server 4 is not determined to be the first subscription server. In this case, the subscription server 4 directly subscribes to messages from the storage server 1 or the storage server 2.

The storage server 2 is the same as the storage server 1. As shown in FIG. 1, the storage server 2 determines the first subscription server in the set of subscription servers, determines the target subscription server of the first subscription server, and instructs the first subscription server to subscribe to a message from a target subscription server corresponding to the first subscription server. The processes that the storage server 2 performs the above method are the same as the processes performed by the storage server 1, which are not repeated herein.

The embodiments of the present disclosure realize that the first subscription server subscribes to messages from the target subscription server, such that the number of subscription servers accessing the storage server simultaneously is reduced, and the number of subscription servers accessing the distributed message queue system simultaneously is reduced, thereby effectively dispersing the subscription pressure of a plurality of subscription servers to the distributed message queue system, greatly reducing the network communication load of the distributed message queue system, and reducing the consumption of machine resources.

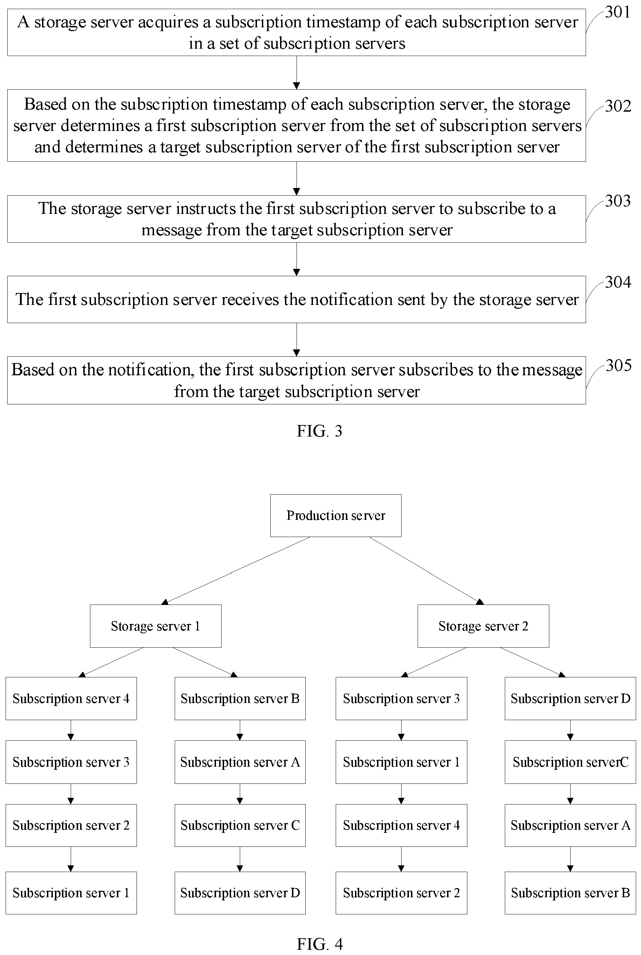

FIG. 3 is a flowchart of another data distribution method according to an embodiment of the present disclosure. The method includes the following processes 301-305.

In 301, a storage server acquires a subscription timestamp of each subscription server in a set of subscription servers.

In embodiments of the present disclosure, the storage server acquires the subscription timestamp of each of the subscription servers by any one of the following methods or a combination of a plurality of following methods.

In a first method, a subscription request sent by the subscription server is received, and the subscription timestamp of the subscription server is determined based on the subscription request.

In some embodiments, in the case that the subscription server subscribes to a message from the storage server, the subscription server sends a subscription request to the storage server, requesting to subscribe to the message in a message queue stored in the storage server.

In some embodiments, the subscription request includes a starting time point of the subscription message and a number of subscription messages. Upon receiving the subscription request, the storage server parses the subscription request to determine the specific message that the subscription server needs to subscribe to.

For example, in conjunction with 201 to 203, in a scenario where 5 messages whose time points are 001 to 005 are subscribed by the subscription server 1 from the storage server 1, the subscription server 1 sends a subscription request to the storage server 1. In some embodiments, the subscription request includes the starting time point 001 and the number of messages that need to be subscribed to which is 5. Upon receiving the subscription request, the storage server 1 parses the subscription request and determines that the subscription server 1 needs to subscribe to 5 messages whose time points are 001 to 005. In this case, the storage server 1 determines that the subscription timestamp of the subscription server 1 is 005. The subscription timestamp 005 indicates that the subscription server 1 is subscribing to the messages at the time point 005 and before the time point 005. Upon receiving the subscription request, the storage server 1 sends the 5 messages whose time points are 001 to 005 to the subscription server 1.

Similarly, the storage server 1 determines the subscription timestamps of the subscription server 2, the subscription server 3, and the subscription server 4 based on the subscription requests sent by the subscription server 2, the subscription server 3, and the subscription server 4, respectively.

It should be noted that in the case that the subscription server 3 and the subscription server 4 do not send a subscription request to the storage server 1, the subscription timestamps of the subscription server 3 and the subscription server 4 can be determined by a following second method.

The processes that the subscription server sends a subscription request to the storage server, the storage server parses the subscription request, and sends corresponding messages to the subscription server based on the subscription request are not limited in the embodiments of the present disclosure.

In the second method, feedback information sent by the subscription server is received, and the subscription timestamp of the subscription server is determined based on the feedback information.

The feedback information is sent from the subscription server to the storage server after the subscription server subscribes to a message from other subscription servers. For example, the feedback information is sent by the subscription server to the storage server after the subscription server subscribes to a message from the target subscription server. The feedback information includes the subscription timestamp.

In some embodiments, after the subscription server subscribes to a message from other subscription servers (such as target subscription server), the subscription server determines its own subscription timestamp based on the subscribed message, and sends feedback information including the subscription timestamp to the storage server.

For example, in conjunction with 201 to 203, in a scenario where the subscription server 1 subscribes to messages whose time points are 006 to 010 from any one of the subscription server 2, the subscription server 3, and the subscription server 4, the subscription server 1 determines that the 5 messages whose time points are 006 to 010 have been subscribed to and stored, determines that its own subscription timestamp is 010, and sends feedback information including the subscription timestamp 010 to the storage server 1 and the storage server 2. In this case, the storage server 1 determines the subscription timestamp of the subscription server 1 based on the feedback information sent by the subscription server 1.

The process that the storage server 2 determines the subscription timestamps of the subscription server 1, the subscription server 2, the subscription server 3, and the subscription server 4 is the same as that of the subscription server 1, which is not repeated herein.

In 302, based on the subscription timestamps of the subscription servers, the storage server determines a first subscription server from the set of subscription servers and determines a target subscription server of the first subscription server.

In some embodiments, the storage server sorts the subscription servers based on the subscription timestamps of the subscription servers to acquire a sorting result of the subscription servers; and based on the sorting result, determines the first subscription server from the subscription servers and determines the target subscription server of the first subscription server.

In some embodiments, the sorting result is a binary tree sorting result.

In some embodiments, the storage server sorts the subscription servers based on the subscription timestamps of the subscription servers to acquire the binary tree sorting result.

For example, in conjunction with 301, referring to FIG. 1, upon determining that the subscription timestamps of the subscription server 1, the subscription server 2, the subscription server 3, and the subscription server 4 are 005, 010, 015, and 020 respectively, the storage server 1 builds up a binary tree by taking the subscription timestamp of each of the subscription servers as a key value of the binary tree. Each node in the binary tree corresponds to a subscription server in the set of subscription servers. The subscription timestamp of the subscription server corresponding to each child node in the binary tree is less than the subscription timestamp of the subscription server corresponding to the parent node. As shown in FIG. 1, in the binary tree sorting result, the subscription timestamp of the subscription server 4 corresponding to the root node is the greatest, and the subscription timestamps of the subscription server 2 and the subscription server 3 corresponding to the child nodes are less than the subscription timestamp of the subscription server 4 corresponding to their parent node (root node). The subscription timestamp of the subscription server 1 corresponding to the child node is less than the subscription timestamp of the subscription server 3 corresponding to its parent node.

In some other embodiments, in the case that the sorting result is a binary tree sorting result, based on the sorting result, determining the first subscription server from the set of subscription servers and determining the target subscription server of the first subscription server includes: determining subscription servers other than a second subscription server as the first subscription servers based on the binary tree sorting result; selecting the subscription servers corresponding to some or all of ancestor nodes of a specified node as the target subscription servers of the first subscription servers. The second subscription server is the subscription server corresponding to the root node of the binary tree. The specified node corresponds to the first subscription server.

In the embodiments of the present disclosure, in the case that the sorting result is a binary tree sorting result, because the subscription timestamp of the subscription server corresponding to the root node is the greatest, other subscription servers can subscribe to a message from the subscription server corresponding to the root node, and the subscription server corresponding to the root node can only subscribe to a message from the storage server. Therefore, subscription servers other than the subscription server corresponding to the root node are determined as the first subscription servers. As shown in FIG. 1, the subscription server 1, the subscription server 2, and the subscription server 3 other than the subscription server 4 corresponding to the root node are determined as the first subscription servers.

As for the process for determining the target subscription server of the first subscription server, since among ancestor nodes of a binary tree node corresponding to the first subscription server, the subscription timestamp of the subscription server corresponding to each ancestor node is greater than the subscription timestamp of the subscription server corresponding to the node, the subscription server corresponding to at least one ancestor node is selected from the ancestor nodes of the binary tree node corresponding to the first subscription server as the target subscription server of the first subscription server.

As shown in FIG. 1, for the subscription server 1, the subscription server corresponding to at least one ancestor node (the subscription server 2, the subscription server 3, and the subscription server 4) is selected from the ancestor nodes of the node corresponding to the subscription server 1 (the nodes corresponding to the subscription server 2, the subscription server 3, and the subscription server 4 respectively) as the target subscription servers of the subscription server 1.

Similarly, for the subscription server 2 and the subscription server 3, the subscription server 4 corresponding to the root node is selected as the target subscription server of the subscription server 2 and the subscription server 3.

In the embodiments of the present disclosure, in the case that the sorting result is a binary tree sorting result, an ancestor node of a node corresponding to the first subscription server is determined, and the subscription server corresponding to the ancestor node serves as the target subscription server of the first subscription server. During the process of determining the target subscription server, the same subscription server serving as the target subscription server of a plurality of first subscription servers is avoided, and the communication load and machine resource consumption of the subscription server are reduced. For example, the subscription server 3 serves as the target subscription server of the subscription server 1 and the subscription server 2 simultaneously, and only the subscription server 4 corresponding to the subscription server 2 serves as the target subscription server of the subscription server 2, thereby avoiding the subscription server 3 serving as the target subscription server of the subscription server 1 and the subscription server 2 simultaneously, and reducing the communication load and resource consumption of the subscription server 3. The node corresponding to the subscription server 4 is the ancestor node of the descendant node of the node corresponding to the subscription server 4.

In some other embodiments, in the case that the sorting result is a binary tree sorting result, based on the sorting result, determining the first subscription server from the set of subscription servers and determining the target subscription server of the first subscription server includes: determining other subscription server except a second subscription server as the first subscription server based on the binary tree sorting result, taking a parent node of a specified node as a target node, and taking a subscription server corresponding to the target node as the target subscription server of the first subscription server.

For example, referring to FIG. 1, for the subscription server 1, the parent node of the binary tree node corresponding to the subscription server 1 is taken as the target node (the node corresponding to the subscription server 3), and the subscription server 3 corresponding to the target node is taken as the target subscription server of the subscription server 1.

Similarly, for the subscription server 2, the parent node (the root node) of the binary tree node corresponding to the subscription server 2 is determined as the target node, and the subscription server 4 corresponding to the target node is taken as the target subscription server of the subscription server 2.

In some embodiments, in the case that the sorting result is a binary tree sorting result, the parent node of the binary tree node corresponding to the first subscription server is taken as the target node, and the subscription server corresponding to the target node is taken as the target subscription server of the first subscription server. During the process of determining the target subscription server, the same subscription server serving as the target subscription server of a plurality of first subscription servers is avoided, thereby reducing the communication load and machine resource consumption of the subscription server. Additionally, the target subscription server of the first subscription server is quickly determined, thereby improving the operating efficiency of the entire system.

As shown in FIG. 1, for the subscription server 1, only the subscription server 3 serves as the target subscription server; and for the subscription server 2 and the subscription server 3, only the subscription server 4 serves as the target subscription server. In the case that the number of the subscription servers is large, each first subscription server corresponds to only one target subscription server, such that the target subscription server of each first subscription server can be determined quickly. At the same time, each target subscription server only serves as the target subscription server of the child node of the corresponding node, thereby reducing the communication load of each target subscription server. For example, the subscription server 4 only serves as the target subscription server of the subscription server 2 and the subscription server 3, and the subscription server 3 only serves as the target subscription server of the subscription server 1.

In some embodiments, in the case that the sorting result is a binary tree, the binary tree is a complete binary tree or a full binary tree. In the complete binary tree, each layer except the last layer has reached the maximum number of nodes in the layer, and all nodes in the last layer are in the left row. In the full binary tree, the number of nodes in each layer reaches the maximum. The complete binary tree or the full binary tree has a complete structure, such that the target subscription server of each first subscription server can be quickly and conveniently determined.

In some embodiments, the target subscription server corresponds to an ancestor node of a specified node; or the target subscription server corresponds to a parent node of a specified node. The specified node corresponds to the first subscription server. The first subscription server performs the following processes: subscribing to a target message from the target subscription server corresponding to the parent node; in the case that the target message is not subscribed to from the target subscription server corresponding to the parent node, subscribing to the target message from the target subscription server corresponding to the ancestor node; and in the case that the target message is not subscribed to from the target subscription server corresponding to the ancestor node, subscribing to the target message from the storage server.

The storage server determines a second subscription server corresponding to the root node of the binary tree based on the binary tree sorting result; determines the first subscription server based on the second subscription server, wherein the first subscription server is a subscription server other than the second subscription server; and determines the target subscription server based on the specified node corresponding to the first subscription server. The target subscription server is the subscription server corresponding to the ancestor node or parent node of the specified node.

In some embodiments, the sorting result is a linear sorting result.

In some embodiments, the storage server sorts the subscription servers based on the subscription timestamps of subscription servers to acquire a linear sort result of the subscription servers. For example, in conjunction with 201 to 203, referring to FIG. 4 which is a diagram of a structure of another distributed message queue system according to an embodiment of the present disclosure, upon determining that the subscription timestamps of the subscription server 1, the subscription server 2, the subscription server 3, and the subscription server 4 are 005, 010, 015, and 020, respectively, the storage server 1 sorts the subscription server 1, the subscription server 2, the subscription server 3, and the subscription server 4 based on the determined subscription timestamps to acquire a linear sorting result.

As shown in FIG. 4, in the linear sorting results acquired, the subscription timestamps are in a descending order, the subscription server 4 > the subscription server 3 > the subscription server 2 > the subscription server 1. The process that the storage server 2 sorts the subscription server 1, the subscription server 2, the subscription server 3, and the subscription server 4 based on the subscription timestamps to acquire a linear sorting result is the same as that of the storage server 1, which is not repeated herein.

In some embodiments, the linear sorting result is in order or in reverse order. For example, the linear sorting result determined by the storage server 1 based on the subscription timestamps is: the subscription server 1 < the subscription server 2 < the subscription server 3 < the subscription server 4.

In some other embodiments, in the case that the sorting result is a linear sorting result, based on the sorting result, determining the first subscription server from the set of subscription servers and determining the target subscription server of the first subscription server includes: determining other subscription server except a third subscription server as the first subscription server based on the linear sorting result; and selecting a subscription server from the set of subscription servers as the target subscription server of the first subscription server. The third subscription server is a subscription server corresponding to a greatest subscription timestamp, and the subscription timestamp of the selected subscription server is greater than the subscription timestamp of the first subscription server. That is, the storage server first determines a linear sorting result of the subscription servers based on the subscription timestamps of the subscription servers, then determines the third subscription server corresponding to the greatest subscription timestamp based on the linear sorting result, and then determines the first subscription server based on the third subscription server, the first subscription server being a subscription server other than the third subscription server, and then determines the target subscription server from the set of subscription servers based on the first subscription server, wherein the target subscription server is a subscription server whose subscription timestamp is greater than the subscription timestamp of the first subscription server.

As shown in FIG. 4, the subscription server 1, the subscription server 2, and the subscription server 3 except the subscription server 4 are determined as the first subscription servers. In addition, as shown in FIG. 4, for the subscription server 1, at least one of the subscription server 2, the subscription server 3, and the subscription server 4 is selected as the target subscription server. For the subscription server 2, the subscription server 3 or the subscription server 4 is selected as the target subscription server. For the subscription server 3, the subscription server 4 is directly selected as the target subscription server.

In the embodiments of the present disclosure, the first subscription server and the target subscription server of the first subscription server can be determined more quickly, and at the same time, a plurality of target subscription servers can be quickly determined for each first subscription server.

In some embodiments, in the case that a number of the target subscription servers is more than one, upon determining the target subscription server of the first subscription server, the method further includes: determining a priority of each of target subscription servers based on the sorting result. The priority is configured to instruct the first subscription server to subscribe to the target message from the target subscription server based on the priority of the target subscription server. Accordingly, instructing the first subscription server to subscribe to the message from the target subscription server includes: sending the priority of each of the target subscription servers to the first subscription server, and instructing the first subscription server to subscribe to the message from the target subscription server based on the priority of the target subscription server.

In the embodiments of the present disclosure, the first subscription server selects a target subscription server in order according to the priorities of the target subscription servers, and subscribes to messages from the selected target subscription server. The higher the priority of the target subscription server, the smaller the subscription timestamp. For example, in conjunction with 301 to 302, in the linear sorting result, when the first subscription server is the subscription server 1, the storage server 1 determines that the target subscription servers of the subscription server 1 are the subscription server 2, the subscription server 3, and the subscription server 4 based on the linear sorting result. Since in the linear sorting result, according to the subscription timestamps, the subscription server 4 > the subscription server 3 > the subscription server 2, it is determined that a priority of the subscription server 2 is higher than a priority of the subscription server 3, and the priority of the subscription server 3 is higher than a priority of the subscription server. 4.

In some embodiments, in the binary tree sorting result, the priorities of the target subscription servers are determined based on the node position of each of target subscription servers in the binary tree. For example, when the first subscription server is the subscription server 1, among the target subscription servers of the subscription server 1, a node corresponding to subscription server 4 is a parent node of nodes corresponding to the subscription server 2 and the subscription server 3, thus it is determined that the priorities of the subscription server 2 and the subscription server 3 are higher than the priority of the subscription server 4. In some embodiments, the priorities of the subscription server 2 and the subscription server 3 are the same.

In some embodiments, the priorities of the target subscription servers are determined based on the sorting result. In the case that the priority corresponding to each of the target subscription servers is determined and the number of target subscription servers is more than one, the first subscription server subscribes to a message from the target subscription servers in order according to the priorities. The determination of the priorities can avoid the problem of high communication load and consumption of machine resources caused by one subscription server serving as the target subscription server of a plurality of first subscription servers simultaneously.

For example, referring to FIG. 4, in the linear sorting result, the subscription server 4 is the target subscription server of the subscription server 1, the subscription server 2, and the subscription server 3 simultaneously. If the subscription server 1, the subscription server 2, and the subscription server 3 simultaneously subscribe to a message from the subscription server 4, the subscription server 4 needs to communicate with the subscription server 1, the subscription server 2, and the subscription server 3 simultaneously, such that communication load of the subscription server 4 is high. According to one embodiment of the present disclosure, the subscription server 1 subscribes to a message from the subscription server 2 in order according to the priorities, and the subscription server 2 subscribes to a message from the subscription server 3 in order according to the priorities, such that the subscription server 1, the subscription server 2, and the subscription server 3 are prevented from simultaneously subscribing to a message from the subscription server 4 and communicating with the subscription server 4 simultaneously, and the communication load of the subscription server 4 is reduced.

It should be noted that, the sorting result acquired by sorting the subscription servers based on the subscription timestamps of the subscription servers is any sorting result that can determine the first subscription server and the target subscription of the first subscription server. The specific form of the sorting result is not limited in the embodiments of the present disclosure does.

In 303, the storage server instructs the first subscription server to subscribe to a message from the target subscription server.

That is, the storage server sends a notification message to the first subscription server. The notification message instructs the first subscription server to subscribe to a target message from the target subscription server. The target subscription server has subscribed to and stored the target message. The target message is a message that the first subscription server needs to subscribe to.

In some embodiments, instructing the first subscription server to subscribe to the message from the target subscription server includes: sending identification information of the target subscription server to the first subscription server, such that the first subscription server subscribes to the message from the target subscription server based on the identification information. That is, the notification message sent by the storage server to the first subscription server includes identification information of the target subscription server, and the identification information is configured to instruct the first subscription server to subscribe to the target message from the target subscription server.

In the embodiments of the present disclosure, the identification information of the target subscription server is information that uniquely identifies the target subscription server. In some embodiments, the identification information includes an IP address of the target subscription server. In conjunction with 301 to 302, upon determining that the subscription server 1 is the first subscription server and determining that the target subscription servers of the subscription server 1 are the subscription server 2, the subscription server 3, and the subscription server 4, the storage server 1 sends IP addresses 192.168.2.3 (an IP address of the subscription server 2), 192.168.2.4 (an IP address of the subscription server 3), and 192.168.2.5 (an identification of the subscription server 4) to the subscription server 1, to instruct the subscription server 1 to subscribe to 5 messages whose time points are 006 to 010 from the subscription servers corresponding to the IP addresses 192.168.2.3, 192.168.2.4, and 192.168.2.5 next time.

In some embodiments, the identification information further includes a priority identifier of the target subscription server.

In some embodiments, the identification information sent by the storage server to the first subscription server includes a priority identifier of each target subscription server. For example, in conjunction with the 303, upon determining the priority of each target subscription server of the subscription server 1, the storage server determines the priority identifier of each target subscription server. For example, the priority identifier of the subscription server 4 is determined to be 3, the priority identifier of the subscription server 3 is determined to be 2, and the priority identifier of the subscription server 2 is determined to be 1. The determination of the priority identifier is not limited in the embodiments of the present disclosure.

In some embodiments, the specific data included in the identification information and the specific form of the identification information are determined based on requirements, which are not limited in the embodiments of the present disclosure.

In some embodiments, the first subscription server corresponds to a specified node. In the case that the target subscription server corresponds to an ancestor node of the specified node or the target subscription server corresponds to a parent node of the specified node, the notification message is configured to instruct the first subscription server to: subscribe to the target message from the target subscription server corresponding to the parent node; subscribe to the target message from the target subscription server corresponding to the ancestor node in the case that the target message is not subscribed from the target subscription server corresponding to the parent node; and subscribe to the target message from the storage server in the case that the target message is not subscribed from the target subscription server corresponding to the ancestor node.

In 304, the first subscription server receives the notification sent by the storage server.

In some embodiments, the first subscription server receives and parses a notification message sent by the storage server, and determines the target subscription server based on the notification to subscribe to a target message from the target subscription server. The target message is a message that the first subscription server needs to subscribe to; and the target subscription server has subscribed to and stored the target message.

For example, in conjunction with the 303, the subscription server 1 receives the identification information sent by the storage server 1, the identification information including an IP address, and based on the IP address, determines that the target subscription servers are the subscription server 2, the subscription server 3, and the subscription server 4. In some embodiments, in the case that the identification information sent by the storage server 1 further includes the priority identifier corresponding to each target subscription server, the subscription server 1 determines the priority of each target subscription server.

In some embodiments, for the process that the first subscription server receives and parses the notification message sent by the storage server, reference may be made to the process that the server receives and parses information, which is not limited in the embodiments of the present disclosure.

In 305, based on the notification, the first subscription server subscribes to the message from the target subscription server.

In the embodiments of the present disclosure, upon receiving the notification message sent by the storage server and determining the target subscription server, the first subscription server sends a subscription request to the target subscription server to subscribe to and store the target message.

For example, in conjunction with 304, the subscription server 1 determines that the target subscription servers are the subscription server 2, the subscription server 3, and the subscription server 4. Upon determining the respective IP addresses of the subscription server 2, the subscription server 3, and the subscription server 4, the subscription server 1 subscribes to the message from any one of the subscription server 2, the subscription server 3, and the subscription server 4 until 5 messages whose time points are 006 to 010 are subscribed, and stores the subscribed messages.

In some embodiments, in the case that the identification information further includes the priority identifier corresponding to each subscription server, the subscription server 1 will further determine the priority of each target subscription server at the same time. In this case, based on the priorities, the subscription server 1 first subscribes to the message from the subscription server 2; in the case that the message is not subscribed from the subscription server 2, subscribes to the message from the subscription server 3; and in the case that the message is not subscribed from the subscription server 3, subscribes to the message directly from the subscription server 4. For the process that the first subscription server subscribes to a message from a plurality of target subscription servers based on the priority identifiers may be made with reference to the method of using the priority, which is not limited in the embodiments of the present disclosure.

In some embodiments, in the case that the first subscription server has subscribed to the target message from the target subscription server, the first subscription server determines feedback information based on the subscribed target message, and sends the feedback information to the storage server. The feedback information includes the subscription timestamp of the first subscription server. For the process that the first subscription server subscribes to a message from the target subscription server, determines feedback information based on the subscribed message, and sends the feedback information to the storage server, reference may be made to 301, which is not repeated herein.

In some embodiments, in the case that the first subscription server has not subscribed to the target message from the target subscription server, the first subscription server sends a subscription request to the storage server to subscribe to the target message from the storage server. For example, in conjunction with 301 to 305, in the case that the subscription server 1 has not subscribed to the 5 messages whose time points are 006 to 010 from the subscription server 2, the subscription server 3, and the subscription server 4, the subscription server 1 sends a subscription request to the storage server 1 or the storage server 2 (the subscription server 1 is not aware of the specific storage locations whose time points are 006 to 010, such that the subscription server randomly sends a subscription request to the storage server 1 or the storage server 2) to subscribe to the 5 messages whose time points are 006 to 010.

It should be noted that, for each message queue stored in each storage server, the storage server determines a set of subscription servers that subscribe to a message in the message queue, and determines a first subscription server from the set of subscription servers and a target subscription server of the first subscription server. For example, referring to FIG. 4, the storage server 1 stores a message queue 1 and a message queue 2. The subscription server 1, the subscription server 2, the subscription server 3, and the subscription server 4 subscribe to a message in the message queue 1, and the storage server determines the first subscription server among the above four subscription servers, and determines first subscription object information of each first subscription server. In the same way, a subscription server A, a subscription server B, a subscription server C, and a subscription server D subscribe to a message in message queue 2, the storage server determines the first subscription server among the above four subscription servers, and determines first subscription object information of each first subscription server.

The processes that the storage server 2 respectively determines the first subscription server and the first subscription object information of the first subscription server in the sets of subscription servers subscribing to the message in the message queue 1 and the message queue 2 are the same as the storage server 1, which are not repeated herein.

The embodiments of the present disclosure realize that a subscription server subscribes to a message in a message queue from other subscription servers, such that the number of subscription servers accessing the storage server simultaneously is reduced, and the number of subscription servers accessing the distributed message queue system simultaneously is reduced, thereby effectively dispersing the subscription pressure of a plurality of subscription servers to the distributed message queue system, greatly reducing the network communication load of the distributed message queue system, and reducing the consumption of machine resources.

In some embodiments, upon subscribing to target messages, the subscription server stores the messages from different storage servers in different storage areas by sharding (the storage areas are, for example, shards). For example, the subscription server 1 corresponds to a shard 1 of the storage server 1 and a shard 2 of the storage server 2. The subscription server 1 stores 5 messages whose time points are 001 to 005 in the message queue 1 subscribed from the storage server 1 in the shard 1, stores 5 whose time points are 006 to 010 in the message queue 1 subscribed from the subscription server 2 in the shard 1, stores 5 messages whose time points are 011 to 015 in the message queue 1 subscribed from the subscription server 3 in the shard 1, and stores 5 messages whose time points are 016 to 020 in the message queue 1 subscribed from the subscription server 4 in the shard 1. With reference to FIG. 1, the 20 messages whose time points are 001 to 020 all originate from the storage server 1.

In the same way, the subscription server 1 stores the messages subscribed from the subscription server 2, the subscription server 3, and the subscription server 4 into the shard 2, where the messages originate from the storage server 2. Alternatively, the subscription server 1 stores the messages directly subscribed from the storage server 2 in the shard 2. The time points of the messages are 031 to 060. In some embodiments, the number of the shards is determined based on the number of the storage servers, and one shard corresponds to one storage server.

In some embodiments, when the subscription server 1 subscribes to messages in the message queue 1 originated from the storage server 1, it subscribes to the messages in the message queue 1 from the shard 1 of the subscription server 2, the shard 1 of the subscription server 3, and the shard 1 of the subscription server 4. The messages in the shard 1 are the messages in the message queue 1 subscribed by the subscription server 2, the subscription server 3, and the subscription server 4 from the storage server 1, or the messages subscribed from a shard 1 of other subscription server.

In some embodiments, when the subscription server 1 subscribes to messages in the message queue 1 originated from the storage server 2, it subscribes the messages in the message queue 1 from the shard 2 of the subscription server 2, the shard 2 of the subscription server 3, and the shard 2 of the subscription server 4. The messages in the shard 2 are messages in the message queue 1 subscribed by the subscription server 2, the subscription server 3, and the subscription server 4 from the storage server 2, or the messages subscribed from a shard 2 of other subscription server. The processes that the subscription server 2, the subscription server 3, and the subscription server 4 subscribe to messages from other subscription servers and save the same are the same as the subscription server 1, which are not repeated herein.

In some embodiments, the subscription server stores messages from different storage servers in corresponding shards by sharding, such that the management of messages by the subscription server is facilitated.

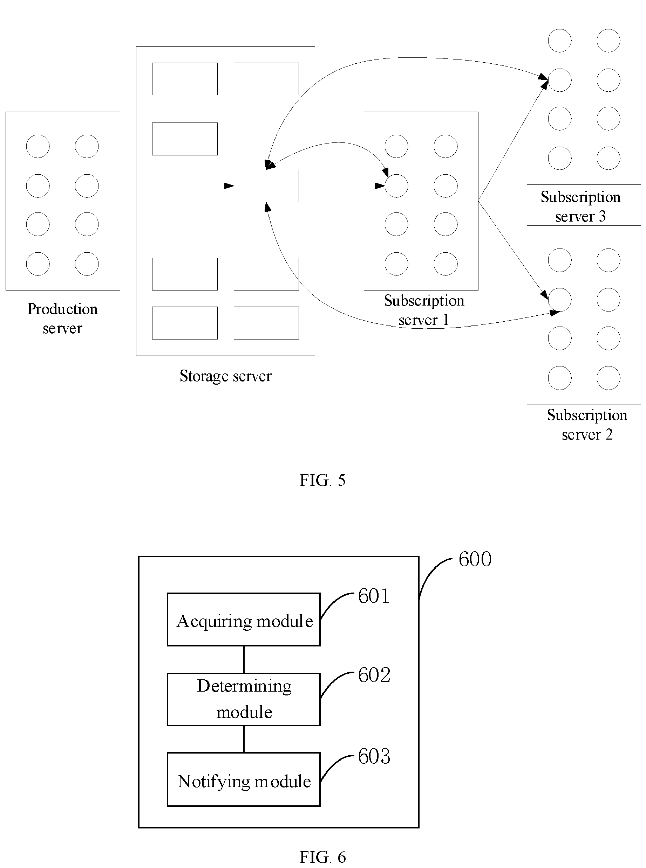

In some embodiments, referring to FIG. 5, messages generated by the production server are published to the storage server, and based on identifiers of message queues sent by the production server, the storage server stores the messages published by the production server in the corresponding message queues. The subscription server 1 sends a subscription request to the storage server to directly subscribe to a message in the message queue from the storage server, and stores the subscribed message in a shard (such as a shard 3) for other subscription servers to subscribe to. The subscription server 2 and the subscription server 3 directly subscribe to the message in the message queue from the subscription server 1, and also stores in the shard 3. Then, the subscription server 2 and the subscription server 3 send feedback messages to the storage server to inform the storage server of the respective subscription timestamp.

In some embodiments, when the production server publishes a message, it randomly selects a storage server corresponding to a shard, and writes the published message to the storage server. In addition, the subscription server subscribing to messages includes two cases: in the case that the messages are allowed to be out of order, the subscription server randomly selects a subscription timestamp corresponding to a shard, and starts subscribing to the messages based on the subscription timestamp; and in the case that the messages are required to be in order, the subscription server selects a shard where the message with the smallest subscription timestamp is located for subscription by using a merge algorithm each time, which is not limited in the embodiments of the present disclosure.

Referring to FIG. 6, FIG. 6 is a block diagram of a data distribution apparatus according to an embodiment of the present disclosure. The data distribution apparatus 600 is applicable to a data distribution system. The data distribution system includes a storage server and a set of subscription servers. The apparatus 600 includes an acquiring module 601, a determining module 602, and a notifying module 603.

The acquiring module 601 is configured to acquire a subscription timestamp of each of the subscription servers, wherein the subscription timestamp is configured to indicate a subscription progress of the subscription server.

The determining module 602 is configured to determine a sorting result of the subscription servers based on the subscription timestamps of the subscription servers; and determine a first subscription server and a target subscription server in the set of subscription servers based on the sorting result, wherein the target subscription server has subscribed to and stored a target message, the target message being a message that the first subscription server needs to subscribe to.

The notifying module 603 is configured to send a notification message to the first subscription server, wherein the notification message is configured to instruct the first subscription server to subscribe to the target message from the target subscription server.

According to the embodiments of the present disclosure, a subscription server subscribes to a message in a message queue from other subscription servers, such that a number of subscription servers accessing a storage server simultaneously is reduced, and a number of subscription servers accessing a distributed message queue system simultaneously is reduced, thereby effectively dispersing the subscription pressure of a plurality of subscription servers to the distributed message queue system, greatly reducing the network communication load of the distributed message queue system, and reducing the consumption of machine resources.

In some embodiments, the acquiring module 601 is configured to: receive a subscription request from the subscription server, and determine the subscription timestamp of the subscription server based on the subscription request; or receive feedback information from the subscription server, and determine the subscription timestamp of the subscription server based on the feedback information; wherein the feedback information is sent by the subscription server to the storage server after the subscription server subscribes to a message from the target subscription server, and the feedback information includes the subscription timestamp.

In some embodiments, the determining module 602 is configured to determine a binary tree sorting result of the subscription servers based on the subscription timestamps of the subscription servers, wherein the target subscription server corresponds to an ancestor node of a specified node, or the target subscription server corresponds to a parent node of a specified node, the specified node being corresponding to the first subscription server.

In some embodiments, the notification message is configured to instruct the first subscription server to subscribe to the target message from the target subscription server corresponding to the parent node; subscribe to the target message from the target subscription server corresponding to the ancestor node in the case that the target message is not subscribed from the target subscription server corresponding to the parent node; and subscribe to the target message from the storage server in the case that the target message is not subscribed from the target subscription server corresponding to the ancestor node.

In some embodiments, the determining module 602 is configured to: determine a second subscription server corresponding to a root node of a binary tree based on the binary tree sorting result; determine the first subscription server based on the second subscription server, wherein the first subscription server is a subscription server other than the second subscription server; and determine the target subscription server based on the specified node corresponding to the first subscription server, wherein the target subscription server is a subscription server corresponding to the ancestor node or parent node of the specified node.

In some embodiments, the determining module 602 is configured to: determine a linear sorting result of the subscription servers based on the subscription timestamps of the subscription servers; determine a third subscription server corresponding to a greatest subscription timestamp based on the linear sorting result; determine the first subscription server based on the third subscription server, wherein the first subscription server is a subscription server other than the third subscription server; and determine the target subscription server from the set of subscription servers based on the first subscription server, wherein the target subscription server is a subscription server with a subscription timestamp being greater than the subscription timestamp of the first subscription server.

In some embodiments, in the case that a plurality of target subscription servers are determined, the determining module 602 is further configured to: determine a priority of each of the target subscription servers based on the sorting result; wherein the priority is configured to instruct the first subscription server to subscribe to the target message from the target subscription server based on the priority of the target subscription server.

In some embodiments, the notification message includes identification information of the target subscription server, and the identification information is configured to instruct the first subscription server to subscribe to the target message from the target subscription server.

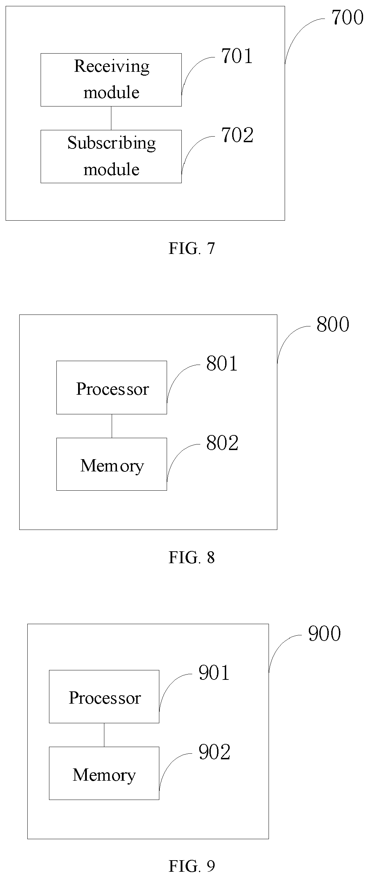

Referring to FIG. 7, FIG. 7 is a block diagram of another data distribution apparatus according to an embodiment of the present disclosure. The data distribution apparatus 700 is applicable to a data distribution system. The data distribution system includes a storage server and a set of subscription servers. The apparatus 700 includes a receiving module 701 and a subscribing module 702.

The receiving module 701 is configured to receive a notification message from the storage server, wherein the notification message is configured to instruct the subscription server to subscribe to a message from a target subscription server. The target subscription server is determined, by the storage server, for the subscription server through determining a sorting result of subscription servers in a set of subscription servers based on subscription timestamps of the subscription servers and determining the subscription server from the subscription servers based on the sorting result; the subscription timestamps is configured to indicate a subscription progress of the subscription servers; and the target subscription server has subscribed to and stored a target message, the target message being a message that the subscription server needs to subscribe to.

The subscribing module 702 is configured to subscribe to the target message from the target subscription server based on the notification message.

The embodiments of the present disclosure realize that a subscription server subscribes to a message in a message queue from other subscription servers, such that a number of subscription servers accessing a storage server simultaneously is reduced, and a number of subscription servers accessing a distributed message queue system simultaneously is reduced, thereby effectively dispersing the subscription pressure of a plurality of subscription servers to the distributed message queue system, greatly reducing the network communication load of the distributed message queue system, and reducing the consumption of machine resources.

In some embodiments, the subscribing module 702 is further configured to: determine feedback information based on the target message, and send the feedback information to the storage server in the case that the target message is subscribed from the target subscription server, wherein the feedback message includes the subscription timestamp of the subscription server; and send a subscription request to the storage server to subscribe to the target message from the storage server in the case that the target message is not subscribed from the target subscription server.

In some embodiments, in the case that a plurality of target subscription servers are determined, the notification message includes identification information and a priority of each of the target subscription servers; and the subscribing module 702 is configured to: subscribe to the target message from the target subscription servers based on the identification information and priority of each of the target subscription servers.

In some embodiments, the sorting result is a binary tree sorting result, and the target subscription server corresponds to an ancestor node of a specified node; or the target subscription server corresponds to a parent node of the specified node; and the specified node corresponds to the subscription server.

In some embodiments, the subscribing module 702 is configured to: subscribe to the target message from the target subscription server corresponding to the parent node; subscribe to the target message from the target subscription server corresponding to the ancestor node in the case that the target message is not subscribed from the target subscription server corresponding to the parent node; and subscribe to the target message from the storage server in the case that the target message is not subscribed from the target subscription server corresponding to the ancestor node.

An embodiment of the present disclosure provides a data distribution system. Referring to FIG. 1, the data distribution system includes a storage server and a subscription server.

The storage server is configured to acquire a subscription timestamp of each subscription server in a set of subscription servers, wherein the subscription timestamp is configured to indicate a subscription progress of the subscription server.

The storage server is further configured to determine a sorting result of the subscription servers in the set of subscription servers based on the subscription timestamps of the subscription servers; and determine a first subscription server and a target subscription server in the set of subscription servers based on the sorting result, wherein the target subscription server has subscribed to and stored a target message, the target message being a message that the first subscription server needs to subscribe to.

The storage server is further configured to send a notification message to the first subscription server.

The first subscription server is configured to, upon receiving the notification message, subscribe to the target message from the target subscription server based on the notification message.

Referring to FIG. 8, FIG. 8 is a block diagram of another electronic device according to an embodiment of the present disclosure. The electronic device 800 includes:
a processor 801; and
a memory 802 configured to store one or more instructions executable by the processor 801.

The processor 801, when executing the one or more instructions stored in the memory 802, is caused to perform the data distribution method as defined in the embodiments shown in FIG. 2 or FIG. 3.

In an exemplary embodiment, a storage medium storing one or more instructions therein is also provided, such as the memory 802 configured to store one or more instructions. The instructions, when executed by the processor 801 of the electronic device 800, cause electronic device 800 to perform the method as defined in the embodiments shown in FIG. 2 or FIG. 3. In some embodiments, the storage medium is a non-transitory computer-readable storage medium. For example, the non-transitory computer-readable storage medium is a read-only memory (ROM), a random-access memory (RAM), a compact disc read-only memory (CD-ROM), a magnetic tape, a floppy disk, an optical data storage device, or the like.

Referring to FIG. 9, FIG. 9 is a block diagram of another electronic device according to an embodiment of the present disclosure. The electronic device 900 includes:
a processor 901; and
a memory 902 configured to store one or more instructions executable by the processor 901.

The processor 901, when executing the one or more instructions stored in the memory 902, is caused to perform the data distribution method as defined in the embodiments shown in FIG. 2 or FIG. 3.

In an exemplary embodiment, a storage medium storing one or more instructions therein is also provided, such as the memory 902 configured to store one or more instructions. The instructions, when executed by the processor 901 of the electronic device 900, cause the electronic device 900 to perform the method as defined in the embodiments shown in FIG. 2 or FIG. 3. In some embodiments, the storage medium is a non-transitory computer-readable storage medium. For example, the non-transitory computer-readable storage medium is a ROM, a RAM, a CD-ROM, a magnetic tape, a floppy disk, an optical data storage device, or the like.

As for the apparatus embodiments, since they are basically similar to the method embodiments, the descriptions are relatively simple, and for related parts, reference may be made to the parts of the descriptions of the method embodiments.

As used herein, the singular forms "a," "an," and "the" include both singular and plural referents unless the context clearly dictates otherwise. Thus, for example, reference to "a memory including an instruction" includes one or more memories that include plurality of instructions as well as a single memory consisting of a single memory, reference to "a protocol" includes a combination of protocols as well as a single protocol, and the like.

## Claims

1. A data distribution method being performed by a storage server of a data distribution system, wherein the data distribution system further comprises a set of subscription servers that subscribe to messages from the storage server or from other subscription servers of the data distribution system, and the method comprises:
acquiring (201; 301) a subscription timestamp of each of the subscription servers, wherein the subscription timestamp is configured to indicate a messages subscription progress of the subscription server;
determining a sorting result of the subscription servers based on the messages subscription progress indicated by the subscription timestamps of the subscription servers;
determining a first subscription server and a target subscription server in the set of subscription servers based on the sorting result, wherein the target subscription server has previously subscribed to and stored a target message, the target message being a message that the first subscription server needs to subscribe to; and
sending a notification message to the first subscription server, wherein the notification message is configured to instruct the first subscription server to subscribe to the target message from the target subscription server,
wherein said acquiring (201; 301) the subscription timestamp of each of the subscription servers comprises:
receiving, in the case that the subscription server subscribes to a message from the storage server, a subscription request from the subscription server, and determining the subscription timestamp of the subscription server based on the subscription request; and
receiving, in the case that the subscription server subscribes to a message from other subscription servers, feedback information from the subscription server, and determining the subscription timestamp of the subscription server based on the feedback information, wherein the feedback information is sent by the subscription server to the storage server after the subscription server subscribes to the message from the target subscription server, and the feedback information comprises the subscription timestamp.

2. The method according to claim 1, wherein said determining the sorting result of the subscription servers based on the subscription timestamps of the subscription servers comprises:
determining a binary tree sorting result of the subscription servers based on the subscription timestamps of the subscription servers, wherein the target subscription server corresponds to an ancestor node of a specified node, or the target subscription server corresponds to a parent node of a specified node, the specified node being corresponding to the first subscription server.

3. The method according to claim 2, wherein the notification message is configured to instruct the first subscription server to:
subscribe to the target message from the target subscription server corresponding to the parent node;
subscribe to the target message from the target subscription server corresponding to the ancestor node in the case that the target message is not subscribed from the target subscription server corresponding to the parent node; and
subscribe to the target message from the storage server in the case that the target message is not subscribed from the target subscription server corresponding to the ancestor node.

4. The method according to claim 2 or 3, wherein said determining the first subscription server and the target subscription server in the set of subscription servers based on the sorting result, comprises:
determining a second subscription server corresponding to a root node of a binary tree based on the binary tree sorting result;
determining the first subscription server based on the second subscription server, wherein the first subscription server is a subscription server other than the second subscription server; and
determining the target subscription server based on the specified node corresponding to the first subscription server, wherein the target subscription server is a subscription server corresponding to the ancestor node or parent node of the specified node.

5. The method according to claim 1, wherein said determining the sorting result of the subscription servers based on the subscription timestamps of the subscription servers, comprises:
determining a linear sorting result of the subscription servers based on the subscription timestamps of the subscription servers; and
said determining the first subscription server and the target subscription server in the set of subscription servers based on the sorting result, comprises:
determining a third subscription server corresponding to a greatest subscription timestamp based on the linear sorting result;
determining the first subscription server based on the third subscription server, wherein the first subscription server is a subscription server other than the third subscription server; and
determining the target subscription server from the set of subscription servers based on the first subscription server, wherein the target subscription server is a subscription server with a subscription timestamp being greater than the subscription timestamp of the first subscription server.

6. The method according to any one of claims 1 to 5, wherein in the case that a plurality of target subscription servers are determined, the method further comprises:
determining a priority of each of the target subscription servers, based on the sorting result;
wherein the priority is configured to instruct the first subscription server to subscribe to the target message from the target subscription servers based on the priority of the target subscription servers.

7. The method according to any one of claims 1 to 6, wherein the notification message comprises identification information of the target subscription server, and the identification information is configured to instruct the first subscription server to subscribe to the target message from the target subscription server.

8. A data distribution method being performed by a data distribution system, wherein the data distribution system comprises a storage server and a set of subscription servers, and the method comprises the steps of method 1, and
receiving (304), by the first subscription server, the notification message from the storage server; and
subscribing to (305), by the first subscription server, the target message from the target subscription server based on the notification message,
wherein the method further comprises:
determining, by the first subscription server, feedback information based on the target message and sending the feedback information to the storage server in the case that the target message is subscribed from the target subscription server, wherein the feedback information comprises the subscription timestamp of the subscription server.

9. The method according to claim 8, wherein the notification message comprises identification information and a priority of each of the target subscription servers in the case that a plurality of target subscription servers are determined; and
said subscribing to (305), by the first subscription server, the target message from the target subscription server based on the notification message comprises:
subscribing, by the first subscription server, to the target message from the target subscription servers based on the identification information and priority of each of the target subscription servers.

10. The method according to any one of claims 8 to 9, wherein the sorting result is a binary tree sorting result, and the target subscription server corresponds to an ancestor node of a specified node; or the target subscription server corresponds to a parent node of the specified node; and the specified node corresponds to the subscription server.

11. The method according to claim 10, wherein said sending, by the first subscription server, the subscription request to the storage server to subscribe to the target message from the storage server in the case that the target message is not subscribed from the target subscription server comprises:
subscribing to, by the first subscription server, the target message from the target subscription server corresponding to the parent node;
subscribing to, by the first subscription server, the target message from the target subscription server corresponding to the ancestor node in the case that the target message is not subscribed from the target subscription server corresponding to the parent node; and
subscribing to, by the first subscription server, the target message from the storage server in the case that the target message is not subscribed from the target subscription server corresponding to the ancestor node.

12. A storage server (600) comprising:
an acquiring module (601), configured to acquire a subscription timestamp of each of the subscription servers in a set of subscription servers that subscribe to messages from the storage server or from other subscription servers of a data distribution system, wherein the subscription timestamp is configured to indicate a messages subscription progress of the subscription server; a determining module (602), configured to determine a sorting result of the subscription servers based on the messages subscription progress indicated by the subscription timestamps of the subscription servers;
wherein the determining module (602) is further configured to determine a first subscription server and a target subscription server in the set of subscription servers based on the sorting result, wherein the target subscription server has previously subscribed to and stored a target message, the target message being a message that the first subscription server needs to subscribe to; and a notifying module (603), configured to send a notification message to the first subscription server, wherein the notification message is configured to instruct the first subscription server to subscribe to the target message from the target subscription server, wherein the acquiring module (601) is configured to:
receive, in the case that the subscription server subscribes to a message from the storage server, a subscription request from the subscription server, and determine the subscription timestamp of the subscription server based on the subscription request; and
receive, in the case that the subscription server subscribes to a message from other subscription servers, feedback information from the subscription server, and determine the subscription timestamp of the subscription server based on the feedback information, wherein the feedback information is sent by the subscription server to the storage server after the subscription server subscribes to the message from the target subscription server, and the feedback information comprises the subscription timestamp.

13. A subscription server (700) for subscribing to messages from a storage server or from other subscription servers of a data distribution system, comprising:
a receiving module (701), configured to receive a notification message from the storage server, wherein the notification message is configured to instruct the subscription server to subscribe to a message from a target subscription server;
wherein the target subscription server is determined, by the storage server, for the subscription server through determining a sorting result of subscription servers in a set of subscription servers based on subscription timestamps of the subscription servers and determining the target subscription server from the set of subscription servers based on the sorting result; the subscription timestamps are configured to indicate messages subscription progress of each of the subscription servers; the target subscription server has previously subscribed to and stored a target message, the target message being a message that the subscription server needs to subscribe to; and
a subscribing module (702), configured to subscribe to the target message from the target subscription server based on the notification message,
wherein the subscribing module (702) is configured to determine feedback information based on the target message and sending the feedback information to the storage server in the case that the target message is subscribed from the target subscription server, wherein the feedback information comprises the subscription timestamp of the subscription server.

14. A data distribution system, comprising: a storage server as defined in claim 12 and a set of subscription servers as defined individually in claim 13.

## Patentansprüche

1. Datenverteilungsverfahren, das von einem Speicherserver eines Datenverteilungssystems durchgeführt wird, wobei das Datenverteilungssystem ferner einen Satz von Abonnementservern umfasst, der Nachrichten vom Speicherserver oder von anderen Abonnementservern des Datenverteilungssystems abonniert, und das Verfahren umfasst:
Erfassen (201; 301) eines Abonnementzeitstempels jedes der Abonnementserver, wobei der Abonnementzeitstempel zum Anzeigen eines Nachrichtenabonnementverlaufs des Abonnementservers ausgelegt ist;
Bestimmen eines Sortierergebnisses der Abonnementserver basierend auf dem durch die Abonnementzeitstempel der Abonnementserver angezeigten Nachrichtenabonnementverlauf;
Bestimmen eines ersten Abonnementservers und eines Zielabonnementservers im Satz von Abonnementservern basierend auf dem Sortierergebnis, wobei der Zielabonnementserver vorher eine Zielnachricht abonniert und gespeichert hat, wobei die Zielnachricht eine Nachricht ist, die der erste Abonnementserver abonnieren muss; und
Senden einer Meldungsnachricht an den ersten Abonnementserver, wobei die Meldungsnachricht so ausgelegt ist, dass sie den ersten Abonnementserver zum Abonnieren der Zielnachricht vom Zielabonnementserver anweist;
wobei das Erfassen (201; 301) des Abonnementzeitstempels jedes der Abonnementserver umfasst:
Empfangen, falls der Abonnementserver eine Nachricht vom Speicherserver abonniert, einer Abonnementanforderung vom Abonnementserver und Bestimmen des Abonnementzeitstempels des Abonnementservers basierend auf der Abonnementanforderung; und
Empfangen, falls der Abonnementserver eine Nachricht von anderen Abonnementservern abonniert, von Rückmeldungsinformationen vom Abonnementserver und Bestimmen des Abonnementzeitstempels des Abonnementservers basierend auf den Rückmeldungsinformationen, wobei die Rückmeldungsinformationen nach dem Abonnieren der Nachricht vom Zielabonnementserver durch den Abonnementserver vom Abonnementserver an den Speicherserver gesendet werden und die Rückmeldungsinformationen den Abonnementzeitstempel umfassen.

2. Verfahren nach Anspruch 1, wobei das Bestimmen des Sortierergebnisses der Abonnementserver basierend auf den Abonnementzeitstempeln der Abonnementserver umfasst:
Bestimmen eines Binärbaum-Sortierergebnisses der Abonnementserver basierend auf den Abonnementzeitstempeln der Abonnementserver, wobei der Zielabonnementserver einem Vorgängerknoten eines spezifizierten Knotens entspricht oder der Zielabonnementserver einem übergeordneten Knoten eines spezifizierten Knotens entspricht, wobei der spezifizierte Knoten dem ersten Abonnementserver entspricht.

3. Verfahren nach Anspruch 2, wobei die Meldungsnachricht so ausgelegt ist, dass sie den ersten Abonnementserver anweist zum:
Abonnieren der Zielnachricht vom Zielabonnementserver, der dem übergeordneten Knoten entspricht;
Abonnieren der Zielnachricht vom Zielabonnementserver, der dem Vorgängerknoten entspricht, falls die Zielnachricht nicht vom Zielabonnementknoten abonniert wird, der dem übergeordneten Knoten entspricht; und
Abonnieren der Zielnachricht vom Speicherserver, falls die Zielnachricht nicht vom Zielabonnementknoten abonniert wird, der dem Vorgängerknoten entspricht.

4. Verfahren nach Anspruch 2 oder 3, wobei das Bestimmen des ersten Abonnementservers und des Zielabonnementservers im Satz von Abonnementservern basierend auf dem Sortierergebnis umfasst:
Bestimmen eines zweiten Abonnementservers, der einem Wurzelknoten eines Binärbaums entspricht, basierend auf dem Binärbaum-Sortierergebnis;
Bestimmen des ersten Abonnementservers basierend auf dem zweiten Abonnementserver, wobei der erste Abonnementserver ein anderer Abonnementserver als der zweite Abonnementserver ist; und
Bestimmen des Zielabonnementservers basierend auf dem spezifizierten Knoten, der dem ersten Abonnementserver entspricht, wobei der Zielabonnementserver ein Abonnementserver ist, der dem Vorgängerknoten oder übergeordneten Knoten des spezifizierten Knotens entspricht.

5. Verfahren nach Anspruch 1, wobei das Bestimmen des Sortierergebnisses der Abonnementserver basierend auf den Abonnementzeitstempeln der Abonnementserver umfasst:
Bestimmen eines linearen Sortierergebnisses der Abonnementserver basierend auf den Abonnementzeitstempeln der Abonnementserver;
wobei das Bestimmen des ersten Abonnementservers und des Zielabonnementservers im Satz von Abonnementservern basierend auf dem Sortierergebnis umfasst:
Bestimmen eines dritten Abonnementservers, der einem größten Abonnementzeitstempel entspricht, basierend auf dem linearen Sortierergebnis;
Bestimmen des ersten Abonnementservers basierend auf dem dritten Abonnementserver, wobei der erste Abonnementserver ein anderer Abonnementserver als der dritte Abonnementserver ist; und
Bestimmen des Zielabonnementservers aus dem Satz von Abonnementservern basierend auf dem ersten Abonnementserver, wobei der Zielabonnementserver ein Abonnementserver mit einem Abonnementzeitstempel ist, der größer als der Abonnementzeitstempel des ersten Abonnementservers ist.

6. Verfahren nach einem der Ansprüche 1 bis 5, wobei das Verfahren, falls eine Mehrzahl von Zielabonnementservern bestimmt wird, ferner umfasst:
Bestimmen einer Priorität jedes der Zielabonnementserver basierend auf dem Sortierergebnis;
wobei die Priorität so ausgelegt ist, dass sie den ersten Abonnementserver zum Abonnieren der Zielnachricht von den Zielabonnementservern basierend auf der Priorität der Zielabonnementserver anweist.

7. Verfahren nach einem der Ansprüche 1 bis 6, wobei die Meldungsnachricht Identifikationsinformationen des Zielabonnementservers umfasst und die Identifikationsinformationen so ausgelegt sind, dass sie den ersten Abonnementserver zum Abonnieren der Zielnachricht vom Zielabonnementserver anweisen.

8. Datenverteilungsverfahren, das von einem Datenverteilungssystem durchgeführt wird, wobei das Datenverteilungssystem einen Speicherserver und einen Satz von Abonnementservern umfasst und das Verfahren die Schritte von Verfahren 1 umfasst, sowie:
Empfangen (304) der Meldungsnachricht vom Speicherserver durch den ersten Abonnementserver; und
Abonnieren (305) der Zielnachricht vom Zielabonnementserver durch den ersten Abonnementserver basierend auf der Meldungsnachricht,
wobei das Verfahren ferner umfasst:
Bestimmen von Rückmeldungsinformationen durch den ersten Abonnementserver basierend auf der Zielnachricht und Senden der Rückmeldungsinformationen an den Speicherserver, falls die Zielnachricht vom Zielabonnementserver abonniert wird, wobei die Rückmeldungsinformationen den Abonnementzeitstempel des Abonnementservers umfassen.

9. Verfahren nach Anspruch 8, wobei die Meldungsnachricht Identifikationsinformationen und eine Priorität jedes der Zielabonnementserver umfasst, falls eine Mehrzahl von Zielabonnementservern bestimmt wird; und
das Abonnieren (305) der Zielnachricht vom Zielabonnementserver durch den ersten Abonnementserver basierend auf der Meldungsnachricht umfasst:
Abonnieren der Zielnachricht von den Zielabonnementservern durch den ersten Abonnementserver basierend auf den Identifikationsinformationen und der Priorität jedes der Zielabonnementserver.

10. Verfahren nach einem der Ansprüche 8 bis 9, wobei das Sortierergebnis ein Binärbaum-Sortierergebnis ist und der Zielabonnementserver einem Vorgängerknoten eines spezifizierten Knotens entspricht oder der Zielabonnementserver einem übergeordneten Knoten des spezifizierten Knotens entspricht; und der spezifizierte Knoten dem Abonnementserver entspricht.

11. Verfahren nach Anspruch 10, wobei das Senden der Abonnementanforderung durch den ersten Abonnementserver an den Speicherserver zum Abonnieren der Zielnachricht vom Speicherserver, falls die Zielnachricht nicht vom Zielabonnementserver abonniert wird, umfasst:
Abonnieren der Zielnachricht durch den ersten Abonnementknoten vom Zielabonnementserver, der dem übergeordneten Knoten entspricht;
Abonnieren der Zielnachricht durch den ersten Abonnementknoten vom Zielabonnementserver, der dem Vorgängerknoten entspricht, falls die Zielnachricht nicht vom Zielabonnementknoten abonniert wird, der dem übergeordneten Knoten entspricht; und
Abonnieren der Zielnachricht durch den ersten Abonnementserver vom Speicherserver, falls die Zielnachricht nicht vom Zielabonnementknoten abonniert wird, der dem Vorgängerknoten entspricht.

12. Speicherserver (600), umfassend:
ein Erfassungsmodul (601), das zum Erfassen eines Abonnementzeitstempels jedes der Abonnementserver in einem Satz von Abonnementservern ausgelegt ist, der Nachrichten vom Speicherserver oder einem anderen Abonnementserver eines Datenverteilungssystems abonniert, wobei der Abonnementzeitstempel zum Anzeigen eines Nachrichtenabonnementverlaufs des Abonnementservers ausgelegt ist;
ein Bestimmungsmodul (602), das zum Bestimmen eines Sortierergebnisses der Abonnementserver basierend auf dem durch die Abonnementzeitstempel der Abonnementserver angezeigten Nachrichtenabonnementverlauf ausgelegt ist;
wobei das Bestimmungsmodul (602) ferner zum Bestimmen eines ersten Abonnementservers und eines Zielabonnementservers im Satz von Abonnementservern basierend auf dem Sortierergebnis ausgelegt ist, wobei der Zielabonnementserver vorher eine Zielnachricht abonniert und gespeichert hat, wobei die Zielnachricht eine Nachricht ist, die der erste Abonnementserver abonnieren muss; und
ein Meldemodul (603), das zum Senden einer Meldungsnachricht an den ersten Abonnementserver ausgelegt ist, wobei die Meldungsnachricht so ausgelegt ist, dass sie den ersten Abonnementservers zum Abonnieren der Zielnachricht vom Zielabonnementserver anweist;
wobei das Erfassungsmodul (601) ausgelegt ist zum:
Empfangen, falls der Abonnementserver eine Nachricht vom Speicherserver abonniert, einer Abonnementanforderung vom Abonnementserver und Bestimmen des Abonnementzeitstempels des Abonnementservers basierend auf der Abonnementanforderung; und
Empfangen, falls der Abonnementserver eine Nachricht von anderen Abonnementservern abonniert, von Rückmeldungsinformationen vom Abonnementserver und Bestimmen des Abonnementzeitstempels des Abonnementservers basierend auf den Rückmeldungsinformationen, wobei die Rückmeldungsinformationen nach dem Abonnieren der Nachricht vom Zielabonnementserver durch den Abonnementserver vom Abonnementserver an den Speicherserver gesendet werden und die Rückmeldungsinformationen den Abonnementzeitstempel umfassen.

13. Abonnementserver (700) zum Abonnieren von Nachrichten von einem Speicherserver oder von anderen Abonnementservern eines Datenverteilungssystems, umfassend:
ein Empfangsmodul (701), das zum Empfangen einer Meldungsnachricht vom Speicherserver ausgelegt ist, wobei die Meldungsnachricht so ausgelegt ist, dass sie den Abonnementserver zum Abonnieren der Nachricht von einem Zielabonnementserver anweist;
wobei der Zielabonnementserver durch den Speicherserver für den Abonnementserver durch Bestimmen eines Sortierergebnisses von Abonnementservern in einem Satz von Abonnementservern basierend auf Abonnementzeitstempeln der Abonnementserver und Bestimmen des Zielabonnementservers aus dem Satz von Abonnementservern basierend auf dem Sortierergebnis bestimmt wird; die Abonnementzeitstempel so ausgelegt sind, dass die den Nachrichtenabonnementverlauf jedes der Abonnementserver anzeigen; der Zielabonnementserver vorher eine Zielnachricht abonniert und gespeichert hat, wobei die Zielnachricht eine Nachricht ist, die der Abonnementserver abonnieren muss; und
ein Abonniermodul (702), das zum Abonnieren der Zielnachricht vom Zielabonnementserver basierend auf der Meldungsnachricht ausgelegt ist,
wobei das Abonniermodul (702) so ausgelegt ist, dass es Rückmeldungsinformationen basierend auf der Zielnachricht bestimmt und die Rückmeldungsinformationen an den Speicherserver sendet, falls die Zielnachricht vom Zielabonnementserver abonniert wird, wobei die Rückmeldungsinformationen den Abonnementzeitstempel des Abonnementservers umfassen.

14. Datenverteilungssystem, umfassend: einen Speicherserver nach Anspruch 12 und einen Satz von Abonnementservern, wie in Anspruch 13 individuell definiert.

## Revendications

1. Procédé de distribution de données exécuté par un serveur de stockage d'un système de distribution de données, dans lequel le système de distribution de données comprend en outre un ensemble de serveurs d'abonnement qui s'abonnent à des messages auprès du serveur de stockage ou auprès d'autres serveurs d'abonnement du système de distribution de données, et le procédé comprend :
l'acquisition (201 ; 301) d'un horodatage d'abonnement de chacun des serveurs d'abonnement, l'horodatage d'abonnement étant configuré pour indiquer un progrès d'abonnement aux messages auprès du serveur d'abonnement ;
la détermination d'un résultat de tri des serveurs d'abonnement en fonction du progrès d'abonnement aux messages indiqué par les horodatages d'abonnement des serveurs d'abonnement ;
la détermination d'un premier serveur d'abonnement et d'un serveur d'abonnement cible parmi l'ensemble de serveurs d'abonnement en fonction du résultat de tri, le serveur d'abonnement cible s'étant préalablement abonné à un message cible et l'ayant stocké, le message cible étant un message auquel le premier serveur d'abonnement a besoin de s'abonner ; et
l'envoi d'un message de notification au premier serveur d'abonnement, le message de notification étant configuré pour donner au premier serveur d'abonnement l'instruction de s'abonner au message cible auprès du serveur d'abonnement cible,
ladite acquisition (201 ; 301) de l'horodatage d'abonnement de chacun des serveurs d'abonnement comprenant :
la réception, dans le cas où le serveur d'abonnement s'abonne à un message auprès du serveur stockage, d'une demande d'abonnement émanant du serveur d'abonnement, et la détermination de l'horodatage d'abonnement du serveur d'abonnement en fonction de la demande d'abonnement ; et
la réception, dans le cas où le serveur d'abonnement s'abonne à un message d'autres serveurs d'abonnement, d'informations en retour en provenance du serveur d'abonnement, et la détermination de l'horodatage d'abonnement du serveur d'abonnement en fonction des informations en retour, les informations en retour étant envoyées par le serveur d'abonnement au serveur de stockage après que le serveur d'abonnement s'est abonné au message auprès du serveur d'abonnement cible, et les informations en retour comprenant l'horodatage d'abonnement.

2. Procédé selon la revendication 1, dans lequel ladite détermination du résultat de tri des serveurs d'abonnement en fonction des horodatages d'abonnement des serveurs d'abonnement comprend : la détermination d'un résultat de tri d'arbre binaire des serveurs d'abonnement en fonction des horodatages d'abonnement des serveurs d'abonnement, le serveur d'abonnement cible correspondant à un noeud ancêtre d'un noeud spécifié, et le serveur d'abonnement cible correspondant à un noeud parent d'un noeud spécifié, le noeud spécifié correspondant au premier serveur d'abonnement.

3. Procédé selon la revendication 2, dans lequel le message de notification est configuré pour donner au premier serveur d'abonnement l'instruction de :
s'abonner au message cible auprès du serveur d'abonnement cible correspondant au noeud parent ;
s'abonner au message cible auprès du serveur d'abonnement cible correspondant au noeud ancêtre dans le cas où le serveur d'abonnement cible correspondant au noeud parent ne s'est pas abonné au message cible ; et
s'abonner au message cible auprès du serveur de stockage dans le cas où le serveur d'abonnement cible correspondant au noeud ancêtre ne s'est pas abonné au message cible.

4. Procédé selon la revendication 2 ou 3, dans lequel ladite détermination du premier serveur d'abonnement et du serveur d'abonnement cible parmi l'ensemble de serveurs d'abonnement en fonction du résultat de tri, comprend :
la détermination d'un deuxième serveur d'abonnement correspondant à un noeud racine d'un arbre binaire en fonction du résultat de tri d'arbre binaire ;
la détermination du premier serveur d'abonnement en fonction du deuxième serveur d'abonnement, le premier serveur d'abonnement étant un serveur d'abonnement autre que le deuxième serveur d'abonnement ; et
la détermination du serveur d'abonnement cible en fonction du noeud spécifié correspondant au premier serveur d'abonnement, le serveur d'abonnement cible étant un serveur d'abonnement correspondant au noeud ancêtre ou au noeud parent du noeud spécifié.

5. Procédé selon la revendication 1, dans lequel ladite détermination du résultat de tri des serveurs d'abonnement en fonction des horodatages d'abonnement des serveurs d'abonnement comprend :
la détermination d'un résultat de tri linéaire des serveurs d'abonnement en fonction des horodatages d'abonnement des serveurs d'abonnement ; et
ladite détermination du premier serveur d'abonnement et du serveur d'abonnement cible parmi l'ensemble de serveurs d'abonnement en fonction du résultat de tri comprend :
la détermination d'un troisième serveur d'abonnement correspondant à un horodatage d'abonnement de valeur la plus élevée en fonction du résultat de tri linéaire ;
la détermination du premier serveur d'abonnement en fonction du troisième serveur d'abonnement, le premier serveur d'abonnement étant un serveur d'abonnement autre que le troisième serveur d'abonnement ; et
la détermination du serveur d'abonnement cible parmi l'ensemble de serveurs d'abonnement en fonction du premier serveur d'abonnement, le serveur d'abonnement cible étant un serveur d'abonnement ayant un horodatage d'abonnement de valeur plus élevée que celle de l'horodatage d'abonnement du premier serveur d'abonnement.

6. Procédé selon l'une quelconque des revendications 1 à 5, dans lequel, dans le cas où une pluralité de serveurs d'abonnement cibles est déterminée, le procédé comprend en outre :
la détermination d'une priorité de chacun des serveurs d'abonnement cibles, en fonction du résultat de tri ; la priorité étant configurée pour donner au premier serveur d'abonnement l'instruction de s'abonner au message cible auprès des serveurs d'abonnement cibles en fonction de la priorité des serveurs d'abonnement cibles.

7. Procédé selon l'une quelconque des revendications 1 à 6, dans lequel le message de notification comprend des informations d'identification du serveur d'abonnement cible, et les informations d'identification sont configurées pour donner au premier serveur d'abonnement l'instruction de s'abonner au message cible auprès du serveur d'abonnement cible.

8. Procédé de distribution de données exécuté par un système de distribution de données,
dans lequel le système de distribution de données comprend un serveur de stockage et un ensemble de serveurs d'abonnement, et le procédé comprend les étapes du procédé 1, et
la réception (304), par le premier serveur d'abonnement, du message de notification en provenance du serveur de stockage ; et
l'abonnement (305), par le premier serveur d'abonnement, au message cible auprès du serveur d'abonnement cible en fonction du message de notification,
le procédé comprenant en outre :
la détermination, par le premier serveur d'abonnement, d'informations en retour en fonction du message cible et l'envoi des informations en retour au serveur de stockage dans le cas où le serveur d'abonnement cible s'est abonné au message cible, les informations en retour comprenant l'horodatage d'abonnement du serveur d'abonnement.

9. Procédé selon la revendication 8, dans lequel le message de notification comprend des informations d'identification et une priorité de chacun des serveurs d'abonnement cibles dans le cas où une pluralité de serveurs d'abonnement cibles sont déterminés ; et
ledit abonnement (305), par le premier serveur d'abonnement, au message cible auprès du serveur d'abonnement cible en fonction du message de notification comprenant :
l'abonnement, par le premier serveur d'abonnement, au message cible auprès des serveurs d'abonnement cibles en fonction des informations d'identification et de la priorité de chacun des serveurs d'abonnement cibles.

10. Procédé selon l'une quelconque des revendications 8 à 9, dans lequel le résultat de tri est un résultat de tri d'arbre binaire, et le serveur d'abonnement cible correspond à un noeud ancêtre d'un noeud spécifié ; ou le serveur d'abonnement cible correspond à un noeud parent du noeud spécifié ; et le noeud spécifié correspond au serveur d'abonnement.

11. Procédé selon la revendication 10, dans lequel ledit envoi, par le premier serveur d'abonnement, de la demande d'abonnement au serveur de stockage pour s'abonner au message cible auprès du serveur de stockage dans le cas où le serveur d'abonnement cible ne s'est pas abonné au message cible, comprend :
l'abonnement, par le premier serveur d'abonnement, au message cible auprès du serveur d'abonnement cible correspondant au noeud parent ;
l'abonnement, par le premier serveur d'abonnement, au message cible auprès du serveur d'abonnement cible correspondant au noeud ancêtre dans le cas où le serveur d'abonnement cible correspondant au noeud parent ne s'est pas abonné au message cible ; et
l'abonnement, par le premier serveur d'abonnement, au message cible auprès du serveur de stockage dans le cas où le serveur d'abonnement cible correspondant au noeud ancêtre ne s'est pas abonné au message cible.

12. Serveur de stockage (600) comprenant :
un module d'acquisition (601), configuré pour acquérir un horodatage d'abonnement de chacun des serveurs d'abonnement d'un un ensemble de serveurs d'abonnement qui s'abonnent à des messages auprès du serveur de stockage ou auprès d'autres serveurs d'abonnement du système de distribution de données, l'horodatage d'abonnement étant configuré pour indiquer un progrès d'abonnement aux messages du serveur d'abonnement ;
un module de détermination (602), configuré pour déterminer un résultat de tri des serveurs d'abonnement en fonction du progrès d'abonnement aux messages indiqué par l'horodatage d'abonnement des serveurs d'abonnement ;
le module de détermination (602) étant en outre configuré pour déterminer un premier serveur d'abonnement et un serveur d'abonnement cible parmi l'ensemble de serveurs d'abonnement en fonction du résultat de tri, le serveur d'abonnement cible s'étant préalablement abonné à un message cible et l'ayant stocké, le message cible étant un message auquel le premier serveur d'abonnement a besoin de s'abonner ; et
un module de notification (603), configuré pour envoyer un message de notification au premier serveur d'abonnement, le message de notification étant configuré pour donner au premier serveur d'abonnement l'instruction de s'abonner au message cible auprès du serveur d'abonnement cible,
le module d'acquisition (601) étant configuré pour :
recevoir, dans le cas où le serveur d'abonnement s'abonne à un message auprès du serveur stockage, une demande d'abonnement émanant du serveur d'abonnement, et déterminer l'horodatage d'abonnement du serveur d'abonnement en fonction de la demande d'abonnement ; et
recevoir, dans le cas où le serveur d'abonnement s'abonne à un message auprès d'autres serveurs d'abonnement, des informations en retour en provenance du serveur d'abonnement, et déterminer l'horodatage d'abonnement du serveur d'abonnement en fonction des informations en retour, les informations en retour étant envoyées par le serveur d'abonnement au serveur de stockage après que le serveur d'abonnement s'est abonné au message auprès du serveur d'abonnement cible et les informations en retour comprenant l'horodatage d'abonnement.

13. Serveur d'abonnement (700) pour s'abonner à des messages auprès d'un serveur de stockage ou auprès d'autres serveurs d'abonnement d'un système de distribution de données, comprenant :
un module de réception (701), configuré pour recevoir un message de notification en provenance du serveur de stockage, le message de notification étant configuré pour donner au premier serveur d'abonnement l'instruction de s'abonner au message cible auprès d'un serveur d'abonnement cible ;
le serveur d'abonnement cible étant déterminé, par le serveur de stockage, en tant que serveur d'abonnement par détermination d'un résultat de tri de serveurs d'abonnement dans un ensemble de serveurs d'abonnement en fonction des horodatages d'abonnement des serveurs d'abonnement et détermination du serveur d'abonnement cible parmi l'ensemble de serveurs d'abonnement en fonction du résultat de tri ; les horodatages d'abonnement étant configurés pour indiquer un progrès d'abonnement aux messages de chacun des serveurs d'abonnement ; le serveur d'abonnement cible s'étant préalablement abonné à un message cible et l'ayant stocké, le message cible étant un message auquel le premier serveur d'abonnement a besoin de s'abonner ; et
un module d'abonnement (702), configuré pour s'abonner au message cible auprès du serveur d'abonnement cible en fonction du message de notification,
le module d'abonnement (702) étant configuré pour déterminer des informations en retour en fonction du message cible et envoyer les informations en retour au serveur de stockage dans le cas où le serveur d'abonnement cible s'est abonné au message cible, les informations en retour comprenant l'horodatage d'abonnement du serveur d'abonnement.

14. Système de distribution de données comprenant : un serveur de stockage tel que défini dans la revendication 12 et un ensemble de serveurs d'abonnement tel que définis individuellement dans la revendication 13.
